(19) Europäisches Patentamt
European Patent Office
Office européen des brevets

(11) **EP 3 237 263 B1**

(12) **EUROPÄISCHE PATENTSCHRIFT**

(45) Veröffentlichungstag und Bekanntmachung des Hinweises auf die Patenterteilung:
**28.11.2018   Patentblatt 2018/48**

(21) Anmeldenummer: **15813049.2**

(22) Anmeldetag: **17.12.2015**

(51) Int Cl.:
**B61H 5/00** *(2006.01)*      **F16D 65/092** *(2006.01)*

(86) Internationale Anmeldenummer:
**PCT/EP2015/080123**

(87) Internationale Veröffentlichungsnummer:
**WO 2016/102285 (30.06.2016 Gazette 2016/26)**

(54) **BREMSBELAG FÜR EINE TEILBELAG-SCHEIBENBREMSE, ANORDNUNG EINES BREMSBELAGS AN EINEM BELAGHALTER UND VERFAHREN ZUM BETÄTIGEN EINES AN EINEM BELAGHALTER GEHALTERTEN BREMSBELAGS**

BRAKE PAD FOR A PARTLY LINED DISC BRAKE, BRAKE PAD ARRANGEMENT ON A PAD CARRIER AND METHOD FOR USING A PAD ATTACHED TO A PAD CARRIER

GARNITURE DE FREIN À DISQUE À GARNITURE PARTIELLE, ASSEMBLAGE D'UNE GARNITURE DE FREIN AVEC UN PORTE- GARNITURE, ET PROCÉDÉ D'ACTIONNEMENT D'UN GARNITURE DE FREIN COMPRENANT UN PORTE-GARNITURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2014   DE 102014119489**

(43) Veröffentlichungstag der Anmeldung:
**01.11.2017   Patentblatt 2017/44**

(73) Patentinhaber: **KNORR-BREMSE Systeme für Schienenfahrzeuge GmbH 80809 München (DE)**

(72) Erfinder:
• **FUDERER, Erich 82256 Fürstenfeldbruck (DE)**
• **ELSTORPFF, Marc-Gregory 80638 München (DE)**
• **MATHIEU, Michael 82178 Puchheim (DE)**
• **LANGWADT, Marco 80992 München (DE)**
• **JUNG, Alexander 82131 Gauting (DE)**

(56) Entgegenhaltungen:
EP-A1- 0 784 761      EP-A1- 2 713 075
CN-A- 101 975 234     CN-A- 102 003 482
CN-U- 201 810 707     CN-U- 201 836 269

EP 3 237 263 B1

**Beschreibung**

Die vorliegende Erfindung betrifft einen Bremsbelag für eine Teilbelag-Scheibenbremse eines Schienenfahrzeugs gemäß dem Oberbegriff des Anspruchs 1, eine Anordnung eines solchen Bremsbelags an einem Belaghalter einer Bremsscheibenanordnung eines Schienenfahrzeugs sowie ein Verfahren zum Betätigen eines an einem Belaghalter einer Bremsscheibenanordnung eines Schienenfahrzeuges gehalterten Bremsbelags.

Ein gattungsgemäßer Bremsbelag ist in der EP 0 784 761 B1 beschrieben. Bei dem dort beschriebenen Bremsbelag wird durch eine Aufteilung der Gesamtbelagfläche in mehrere kleine Belagelemente sowie durch eine statisch bestimmte Übertragung einer Zuspannkraft eines Zangenhebels einer Scheibenbremse eines Schienenfahrzeugs auf diese Belagelemente ein sehr gleichmäßiger Wärmeeintrag in die Bremsscheibe dieser Scheibenbremse erzielt.

Weitere gattungsgemäße Bremsbeläge sind beispielsweise aus der CN 101 975 234 A, der CN 201 836 269 U, der CN 102 003 482 A oder der CN 201 810 707 U bekannt.

Die Kraft des Zangenhebels wird dabei von einem Belaghalter, an dem der Bremsbelag gehaltert ist, gleichmäßig auf jeweilige Hälften eines Belagträgers, an dem die Belagelemente gehaltert sind, aufgeteilt.

Die auf eine solche Hälfte des Belagträgers wirkende Kraft des Zangenhebels wird hier über jeweils drei an dem Belagträger gelagerte Trägerbleche abgestützt. Die Kraft wird dabei so aufgeteilt, dass alle Trägerbleche gleichmäßig belastet werden. Jedes der Trägerbleche wiederum teilt die von dem Zangenhebel ausgeübte Kraft wiederum gleichmäßig auf die an einem solchen Trägerblech gelagerten Belagelemente auf.

Eine solche Anordnung eines Trägerbleches mit daran über sphärische Lager gehaltenen Belagelementen wird im Folgenden als Gruppenelement bezeichnet.

Diese Gruppenelemente und auch die drei Belagelemente eines solchen Gruppenelementes liegen auf unterschiedlichen Laufkreisdurchmessern in Bezug auf die Bremsscheibe, an denen die Belagelemente bei einem Bremsvorgang anliegen.

Durch diese Positionierung der Belagelemente auf unterschiedlichen Laufkreisquerschnitten ist auch die Gleitgeschwindigkeit der Belagelemente auf der Bremsscheibe unterschiedlich groß.

Bedingt durch die unterschiedlichen Gleitgeschwindigkeiten kann es bei gleicher Flächenpressung der Belagelemente zu unterschiedlich schnellem Verschleiß der Belagelemente und damit zu einer Schrägstellung des Trägerbleches und sogar des gesamten Belaghalters kommen.

Die Lagerung der Belagelemente auf dem Trägerblech ist dabei so gestaltet, dass sie mit einer über die Fläche konstanten Flächenpressung auf der Bremsscheibe aufliegen.

Da jedoch die lokale Gleitgeschwindigkeit über der Elementfläche nicht konstant ist, neigt auch jedes der Belagelemente zu einem Schrägverschleiß.

Ist dieser Schrägverschleiß innerhalb eines Belagelementes oder auch innerhalb eines Gruppenelementes zu groß, kann dies zu einer einseitigen Anlage der Belagelemente am Trägerblech bzw. der Trägerbleche am Belagträger kommen. Dadurch wird die gewünschte gleichmäßige Kraftaufteilung beeinträchtigt, wodurch sich das Tragbild des Bremsbelages verschlechtert.

Die Leistungsfähigkeit einer Scheibenbremse ist dabei unter anderem durch die auf der Reibfläche der Bremsscheibe auftretende Oberflächentemperatur begrenzt. Damit treten bei zu hoher Oberflächentemperatur anwachsende Wärmerisse auf, die unzulässige Größen erreichen können und dadurch einen Austausch der Bremsscheibe erforderlich machen.

Je größer die Schwankungen der Oberflächentemperatur auf der Bremsscheibe sind, desto geringer ist die Wärmeenergie, die eine Bremsscheibe während einer Bremsung ohne Schädigung aufnehmen kann. Demgemäß leitet ein optimal gestalteter Bremsbelag die Wärmeenergie gleichmäßig über die gesamte Reibfläche in die Bremsscheibe ein, ohne größere Temperaturdifferenzen (beispielsweise Hotspots) auf der Oberfläche zu erzeugen.

Um die oben genannten Anforderungen zu erfüllen, sind die Bremsbeläge von Schienenfahrzeugen, insbesondere von Hochgeschwindigkeitszügen, sehr aufwändig konstruiert, so dass diese als Verschleißteil einen erheblichen Anteil an den Betriebskosten solcher Schienenfahrzeuge verursachen.

Der Verschleiß eines Bremsbelages ist unter anderem wesentlich abhängig von der Flächenpressung zwischen dem Bremsbelag und der Bremsscheibe und von der Gleitgeschwindigkeit der Bremsscheibe auf den Reibbelägen.

$$v' \sim P^{\alpha} \cdot v^{\beta}$$

mit

| | |
|---|---|
| v': | Verschleißgeschwindigkeit |
| P: | Flächenpressung |
| v: | Gleitgeschwindigkeit |
| $\alpha, \beta$: | Materialkennwerte |

[Saumweber, Gerum: "Grundlagen der Schienenfahrzeugbremse", Hestra-Verlag]

Aus den oben genannten Gründen kommt es im Betrieb solcher Schienenfahrzeuge oft zu einem Schrägverschleiß der Bremsbeläge. Daher müssen diese oftmals getauscht werden, ohne dass das vorhandene Verschleißvolumen der Bremsbeläge vollständig ausgenutzt werden kann.

Aufgabe der vorliegenden Erfindung ist es, einen Bremsbelag für Schienenfahrzeuge, eine Anordnung eines solchen Bremsbelags an einem Belaghalter einer Bremsscheibenanordnung eines Schienenfahrzeugs sowie ein Verfahren zum Betätigen eines an einem Belaghalter einer Bremsscheibenanordnung eines Schienenfahrzeuges gehalterten Bremsbelags bereit zu stellen, mit dem ein über der gesamten Belagfläche möglichst gleichmäßig voranschreitender Verschleiß erreicht wird, um das vorhandene Verschleißvolumen optimal auszunutzen und ein vorzeitiges Auswechseln des Bremsbelages wegen schrägverschleißender Elemente oder Elementgruppen zu verhindern und durch Aufrechterhaltung eines gleichmäßigen Tragbildes einen gleichmäßigen Wärmeeintrag von den Belagelementen in die Bremsscheibe unabhängig vom Verschleißzustand der Belagelemente zu erhalten.

Diese Aufgabe wird durch einen Bremsbelag für ein Schienenfahrzeug mit den Merkmalen des Anspruchs 1, eine Anordnung eines solchen Bremsbelags an einem Belaghalter einer Bremsscheibenanordnung eines Schienenfahrzeugs mit den Merkmalen des Anspruch 8 sowie ein Verfahren zum Betätigen eines an einem Belaghalter einer Bremsscheibenanordnung eines Schienenfahrzeuges gehalterten Bremsbelags mit den Merkmalen des Anspruch 9 gelöst.

Bei dem erfindungsgemäßen Bremsbelag für eine Teilbelag-Scheibenbremse eines Schienenfahrzeuges, der einen Belagträger sowie mehrere an dem Belagträger angeordnete Gruppenelemente aufweist, wobei jedes der Gruppenelemente aus einem Trägerblech und mehreren an dem Trägerblech angeordneten Belagelementen besteht, wobei an den jeweiligen Trägerblechen Belagelemente mit wenigstens zwei unterschiedlich großen Reibflächen angeordnet sind und wobei die Belagelemente in ihrer Gesamtfläche zumindest annähernd in einem Kreisringsektor angeordnet sind, sind wenigstens zwei voneinander verschiedene erste und zweite Gruppenelemente an dem Belagträger angeordnet.

Die verschiedenen Gruppenelemente unterscheiden sich dabei dadurch, dass bei den ersten Gruppenelementen die Anzahl der Belagelemente mit größerer Reibfläche größer ist als die Anzahl der Belagelemente mit kleinerer Reibfläche. Bei den zweiten Gruppenelementen ist die Anzahl der Belagelemente mit größerer Reibfläche kleiner als die Anzahl der Belagelemente mit kleinerer Reibfläche.

Die ersten Gruppenelemente sind dabei radial zum Mittelpunkt des Kreises, sprich annähernd zur Drehachse der Bremsscheibe, weiter außen an dem Belagträger angeordnet als die zweiten Gruppenelemente.

Dadurch ergibt sich ein kontinuierlicher, von radial innen nach außen abnehmender Verlauf der Flächenpressung, was die Neigung zu Schrägverschleiß wesentlich reduziert.

Außerdem ermöglicht die Anordnung, die einzelnen Belagelemente möglichst dicht nebeneinander anzuordnen. Die einzelnen Belagelemente weisen dabei aufeinander abgestimmte Konturen auf, wodurch eine möglichst große Reibfläche geschaffen wird, die für einen gleichmäßigeren Wärmeeintrag in die Bremsscheibenoberfläche sorgt.

Vorteilhafte Ausführungsvarianten der Erfindung sind Gegenstand der Unteransprüche.

Nach einer bevorzugten Ausführungsvariante der Erfindung sind die Belagelemente auf den Trägerblechen derart angeordnet, dass eine Symmetrieebene jedes der Gruppenelemente zumindest annähernd radial zum Mittelpunkt eines den Kreisringsektor beinhaltenden gedachten Kreises ausgerichtet ist, wobei dem Mittelpunkt des Kreises im montierten Zustand des Bremsbelags der Drehachse einer Bremsscheibe der Teilbelag-Scheibenbremse entspricht Dadurch wird zum einen eine radial von innen nach außen abnehmende Flächenpressung erreicht. Die Ausrichtung der Symmetrieebene in der oben beschriebenen Weise ermöglicht zudem eine Vergrößerung der Reibfläche der Belagelemente, was sich positiv auf den auf die Bremsenergie bezogenen Verschleiß des Bremsbelages aufgrund einer gleichmäßigeren und damit niedrigeren Oberflächentemperatur auf der Bremsscheibe auswirkt.

Zur weiteren Reduktion des Schrägverschleißes sind nach einer weiteren bevorzugten Ausführungsvariante wenigstens zwei der Belagelemente eines Gruppenelementes in gleich großer Reibfläche zumindest annähernd auf einer gedachten ersten Kreislinie des Kreisringsektors und wenigstens ein Belagelement des Gruppenelementes zumindest annähernd auf einer gedachten zweiten Kreislinie des Kreisringsektors über das Trägerblech an dem Belagträger angeordnet.

In einer bevorzugten Ausführungsvariante der Erfindung weist jedes der Gruppenelemente drei Belagelemente auf.

Zur weiteren Förderung eines gleichmäßigen Tragbildes des Belages sind alle Belagelemente mit größerer Reibfläche der ersten Gruppenelemente zumindest annähernd auf der gemeinsamen gedachten ersten Kreislinie des Kreisringsektors angeordnet.

Entsprechendes gilt vorzugsweise auch für alle Belagelemente mit kleiner Reibfläche der zweiten Gruppenelemente, die zumindest annähernd auf der gemeinsamen gedachten zweiten Kreislinie des Kreisringsektors angeordnet sind.

Als besonders vorteilhaft hat sich ein Flächenverhältnis der Belagelemente mit kleinerer Reibfläche zu den Belagelementen mit größerer Reibfläche zwischen 0,7 und 0,9, besonders bevorzugt zwischen 0,81 und 0,83 herausgestellt.

Die erfindungsgemäße Anordnung eines Bremsbelags der Teilbelag-Scheibenbremse eines Schienenfahrzeugs an einem Belaghalter der Bremsscheibenanordnung des Schienenfahrzeugs zeichnet sich dabei durch einen wie oben ausgebildeten Bremsbelag aus.

Nachfolgend werden Ausführungsbeispiele der Erfindung anhand der beiliegenden Zeichnungen näher erläutert. Es zeigen:

Figur 1        eine perspektivische Ansicht einer an einem Belaghalter festgelegten Ausführungsvariante eines erfindungsgemäßen Bremsbelages,

Figur 2        eine perspektivische Explosionsansicht des in Figur 1 dargestellten Bremsbelages,

Figur 3 und 4        Draufsichten auf eine Ausführungsvariante eines erfindungsgemäßen Bremsbelages mit Gruppenelementen mit unterschiedlich großen Belagelementen und

Figur 5        eine perspektivische Ansicht eines Gruppenelementes.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsbelags, der Belagelemente, der Trägerbleche, des Belagträgers, des Belaghalters und anderer Teile. Diese Begriffe sind nicht einschränkend zu verstehen, das heißt, durch verschiedene Arbeitsstellungen oder die spiegelsymmetrische Auslegung oder dergleichen können sich diese Bezüge ändern.

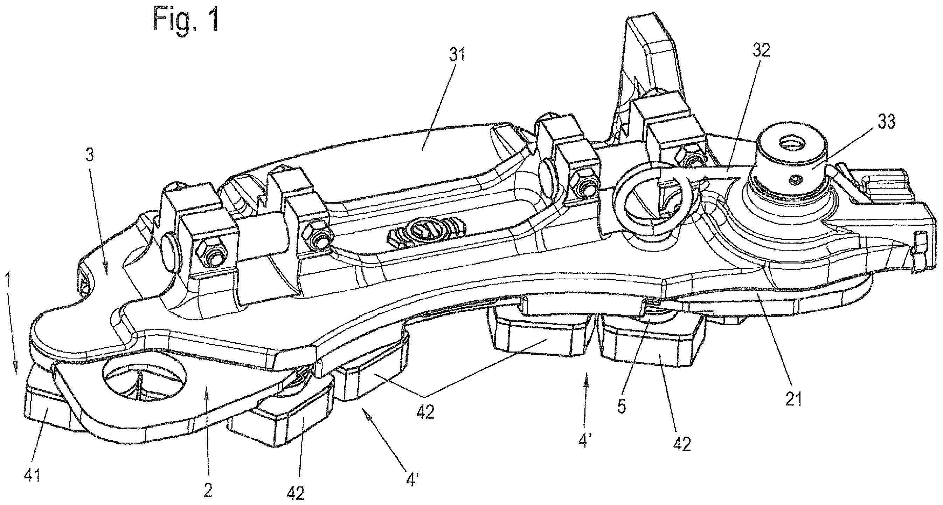

In Figur 1 ist mit dem Bezugszeichen 1 insgesamt eine Ausführungsvariante eines erfindungsgemäßen Bremsbelags bezeichnet. Der Bremsbelag einer Teilbelag-Scheibenbremse eines Schienenfahrzeugs wird dabei im Einsatz an einem Belaghalter 3 des Schienenfahrzeugs festgelegt.

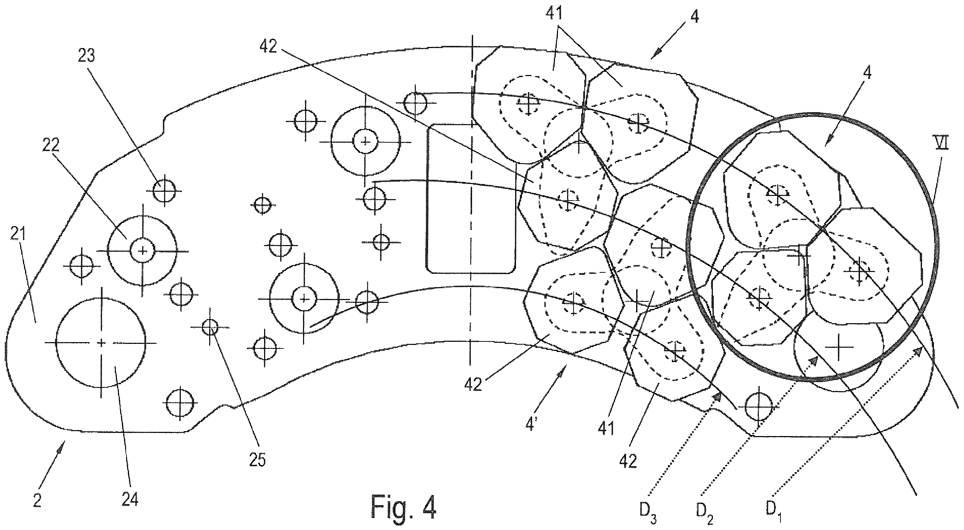

Wie in den Figuren 1 bis 4 zu erkennen ist, weist ein solcher Bremsbelag für eine Teilbelag-Scheibenbremse eines Schienenfahrzeugs einen Belagträger 2 auf, der an dem Belaghalter 3 festlegbar ist, sowie mehrere an dem Belagträger 2 angeordnete Gruppenelemente 4, 4'.

Jedes dieser Gruppenelemente 4, 4' besteht dabei im Wesentlichen aus einem Trägerblech 5 und mehreren an diesem gelagerten Belagelementen 41, 42.

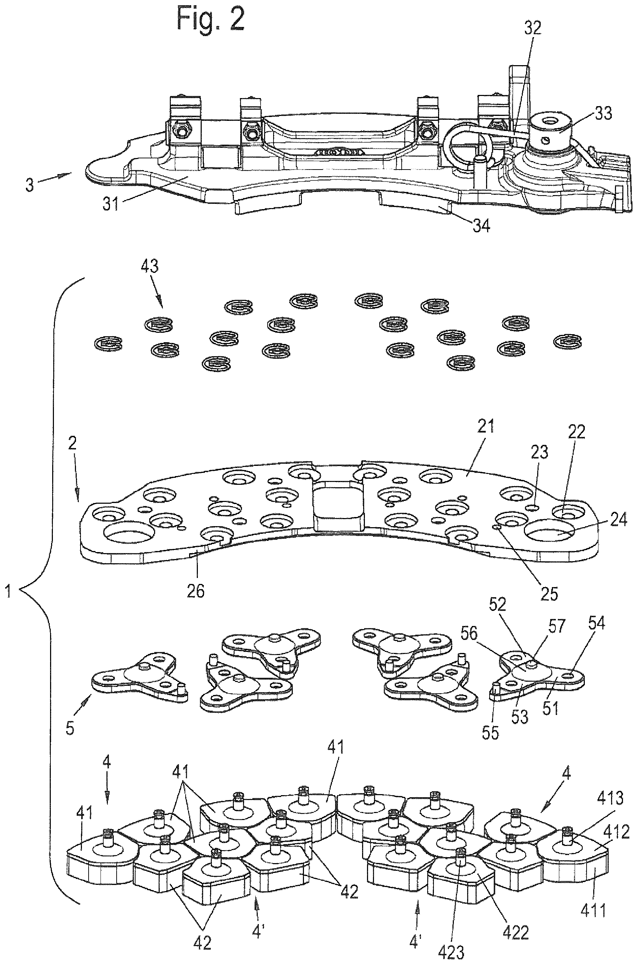

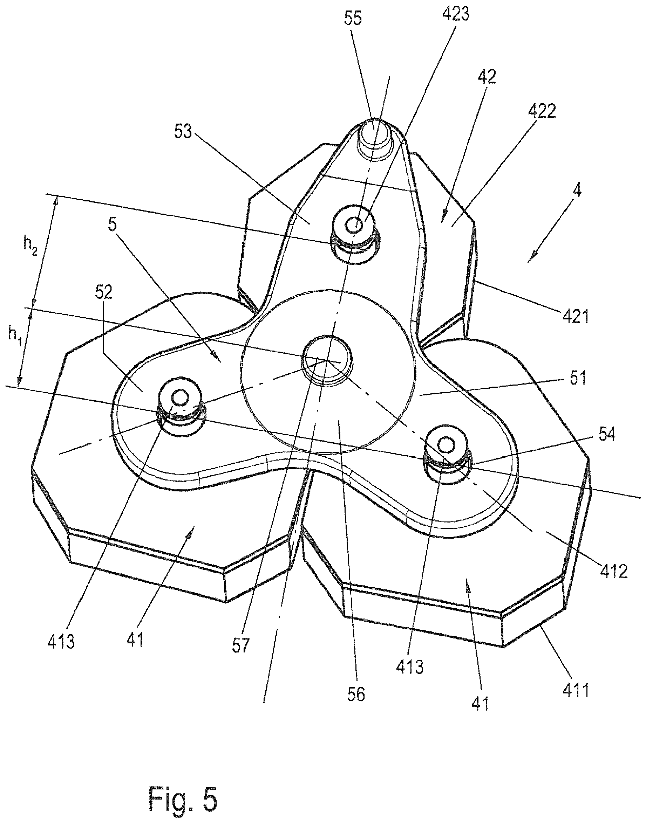

Wie in den Figuren 2 und 5 gezeigt ist, sind die Belagelemente 41, 42 bevorzugt sphärisch an den Trägerblechen 5 gelagert. Die Trägerbleche 5 selbst sind bevorzugt ebenso sphärisch an dem Belagträger 2 gelagert.

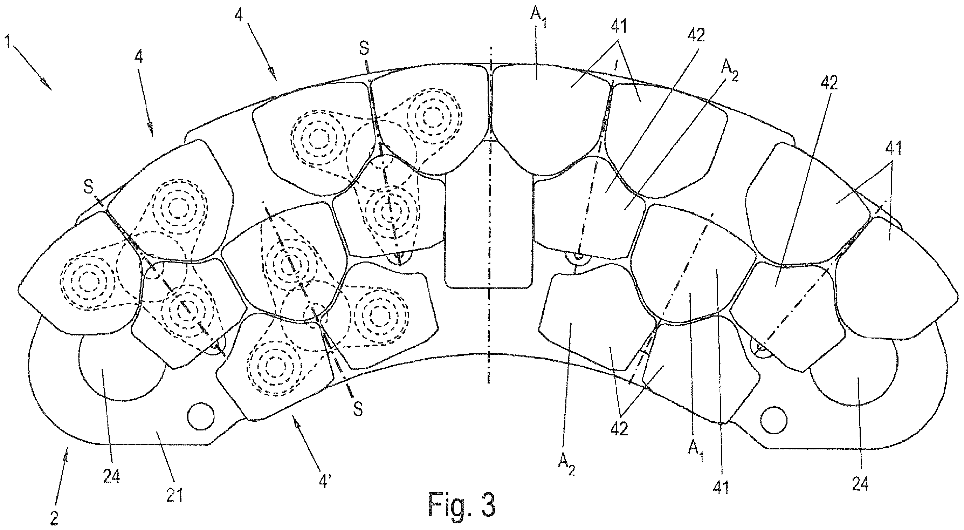

Bevorzugt sind jeweils drei der Belagelemente 41, 42 an einem Trägerblech 5 angeordnet, wie es beispielhaft in Figur 3 gezeigt ist.

Die Lagerung der Belagelemente 41, 42 über die Trägerbleche 5 an dem Belagträger 2 erfolgt dabei dergestalt, dass eine Zuspannkraft $F_Z$ beim Anpressen der Belagelemente 41, 42 an einer Bremsscheibe (nicht dargestellt) erzeugte Flächenpressung P der Belagele

mente 41, 42 radial zur Drehachse der Bremsscheibe mit zunehmendem Abstand der Belagelemente 41, 42 von der Drehachse der Bremsscheibe abnimmt.

Die Trägerbleche 5 weisen Lagerelemente 56 zur sphärischen Lagerung der Trägerbleche 5 an dem Belagträger 2 auf, die bevorzugt als Kalotten mit sich zentral aus diesem erhebenden Nocken 57 ausgebildet sind, wobei die jeweiligen Lagerelemente 56 in entsprechend geformten sphärischen Ausnehmungen 22 auf der dem Belaghalter 3 abgewandten Seite einer Platte 21 des Belagträgers 2 einliegen. Die Nocken 57 der Trägerbleche erstrecken sich in dazu vorgesehene Bohrungen 23 der Trägerplatte 22. Die Nocken 57 verhindern durch einen zusätzlichen Formschluss das Herausgleiten des hier als Kugelfläche ausgebildeten sphärischen Teiles des Lagerelementes 56 aus der Kalotte des Belagträgers 2, falls eine unerwartet hohe Reibkraft oder eine andere, hohe und entsprechend gerichtete Kraft (z. B. durch einen Schaden an der Bremsscheibe) auftritt.

Die Trägerbleche 5 selbst sind dabei, wie in Figur 5 gut zu erkennen ist, bevorzugt mit sich von dem Lagerelement 56 erstreckenden Fingern 51, 52, 53 ausgebildet, in denen Aussparungen 54 zur Aufnahme der Lagerelemente 413,423 der Belagelemente 41, 42 vorgesehen sind.

Neben der sphärischen Lagerung der Trägerbleche 5 über das sphärisch geformte Lagerelement 56 ist bevorzugt an einem Ende eines der Finger 51, 52, 53 ein weiterer Nocken 55 auf der dem Belagträger 2 zugeordneten Seite des Trägerblechs 5 angeformt, das sich in einer entsprechend geformte Ausnehmung 25 der Trägerplatte 2 erstreckt.

Denkbar sind aber auch andere Formgestalten der Trägerbleche 5. Wichtig ist die Trägerbleche 5 so zu gestalten, dass eine Kippbewegung gegenüber dem Belagträger 2 ermöglicht ist.

Diese Aussparungen 54 sind dabei auf ihrer der Trägerplatte 2 abgewandten, an den Belagelementen 41,42 ,43 zugewandten Seiten sphärisch geformt. Zentral im sphärischen Teil der Ausnehmung ist ein Durchgangsloch vorgesehen, durch das die Lagerelemente 413, 423 der Belagelemente 41, 42, 43 sich in dazu vorgesehene Ausnehmungen 22 in dem Belagträger 2 erstrecken und in diesen federelastisch mit Federelementen 43, beispielsweise in Gestalt von Tellerfedern oder Formfedern, gehaltert sind.

Der radiale Abstand $h_1$ zu den radial zur Drehachse der Bremsscheibe weiter entfernten Belagelementen 41 ist geringer ist als der Abstand $h_2$ zu der Aussparung 54 für ein radial von der Drehachse der Bremsscheibe näheren Belagelements 42.

Wie gut in Figur 2 zu erkennen ist, sind die Belagelemente 41, 42 auf dem Trägerblech 5 derart angeordnet, dass eine Symmetrieebene S jedes der Gruppenelemente 4, 4' zumindest annähernd auf radial zum Mittelpunkt eines den Kreisringsektor beinhaltenden gedachten Kreises ausgerichtet ist.

Der Mittelpunkt dieses Kreises entspricht dabei im montierten Zustand des Bremsbelags 1 an der Teilbelag-Scheibenbremse der Drehachse der Bremsscheibe.

Wie desweiteren in Figuren 2 und 3 gut zu erkennen ist, sind an dem Belagträger 2 zwei voneinander verschiedene Gruppenelemente 4, 4' an dem Belagträger 2 angeordnet.

Die ersten Gruppenelemente 4 weisen dabei zwei Belagelemente 41 mit einer Reibfläche $A_1$, die größer ist als das dritte Belagelement 42 mit einer Reibfläche $A_2$.

Wie in den Figuren 2 und 3 weiter zuerkennen ist, sind zwei der Belagelemente 41, 42 eines Gruppenelementes 4, 4' zumindest annähernd auf einer gedachten ersten Kreislinie $D_1$ bzw. $D_3$ des Kreisringsektors und wenigstens ein Belagelement 42, 41 eines Gruppenelementes 4, 4' zumindest annähernd auf einer gedachten zweiten Kreislinie $D_2$ des Kreisringsektors über das jeweilige Trägerblech 5 an dem Belagträger 2 angeordnet.

Denkbar sind prinzipiell auch Gruppenelemente mit mehr als drei Belagelementen 41, 42.

Bei den ersten Gruppenelementen 4 ist die Anzahl der Belagelemente 41 mit größerer Reibfläche $A_1$ größer ist als die Anzahl der Belagelemente 42 mit kleinerer Reibfläche.

Bei den zweiten Gruppenelementen 4' ist die Anzahl der Belagelemente 41 mit größerer Reibfläche $A_1$ kleiner als die Anzahl der Belagelemente 42 mit kleiner Reibfläche $A_2$.

Bei der in den Figuren 1 bis 4 gezeigten Ausführungsvariante sind in radialer Richtung des Kreisringsektors zwei Reihen von Gruppenelementen 4, 4' an dem Belagträger 2 angeordnet.

Die Belagelemente 41 mit größerer Reibfläche $A_1$ der ersten Gruppenelemente 4 sind bevorzugt sämtlich zumindest annähernd auf der gemeinsamen gedachten ersten Kreislinie $D_1$ des Kreisringsektors angeordnet.

Entsprechendes gilt bevorzugt für alle Belagelemente 42 mit kleinerer Reibfläche $A_2$ der zweiten Gruppenelemente 4', die zumindest annähernd auf der gemeinsamen gedachten zweiten Kreislinie $D_3$ des Kreisringsektors angeordnet sind, die radial weiter innen liegt als die ersten Kreislinie $D_1$ des Kreisringsektors, auf der nur Belagelemente 41 mit größerer Reibfläche $A_1$ angeordnet sind.

Die jeweils dritten Belagelemente 42 der ersten Gruppenelemente 4 mit kleinerer Reibfläche $A_2$ und die jeweils dritten Belagelemente 41 der zweiten Gruppenelemente 4' mit größerer Reibfläche $A_1$ sind bevorzugt sämtlich zumindest annähernd auf der gemeinsamen gedachten zweiten Kreislinie $D_2$ des Kreisringsektors angeordnet.

Das Flächenverhältnis $A_2/A_1$ der Belagelemente 42 mit kleinerer Reibfläche $A_2$ zu den Belagelementen 41 mit größerer Reibfläche $A_1$ beträgt bevorzugt zwischen 0,7 und 0,9. Besonders bevorzugt beträgt dieses Flächenverhältnis $A_2/A_1$ zwischen 0,81 und 0,83.

Um eine gleichmäßige Verschleißgeschwindigkeit aller Belagelemente 41, 42 zu erreichen, wird das Flächenverhältnis $A_1/A_2$ der an einen Trägerblech 5 unterschiedlich großen Belagelemente 41, 42 mittels der Laufkreisdurchmesser

$D_1$, $D_2$, an denen jeweiligen Belagelemente 41, 42 am Belagträger 2 angeordnet sind, sowie der Parameter $\alpha$ und $\beta$ aus dem Verschleißgesetz

$$A_1/A_2 = (D_1/D_2)^{\beta/\alpha}$$

ermittelt.

Dabei ergibt sich eine geringere Flächenpressung bei den radial äußeren Belagelementen 41 aufgrund deren größerer Reibfläche bei einer gleichmäßig auf die Belagelemente 41, 42 eines Trägerbleches 5 verteilten Zuspannkraft $F_Z$.

Die Gleichverteilung der Zuspannkraft $F_Z$ auf die einzelnen Belagelemente 41, 42 erfolgt dabei durch eine geeignete Wahl der Anordnung der Belagelemente 41, 42 am Trägerblech 5.

Betrachtet man das in Figur 3 dargestellte Gruppenelement 4, sind die beiden Belagelemente 41 gleicher Fläche in einem Abstand $h_1$ radial vom Lagerpunkt des Gruppenelementes 4 entfernt, während das weitere Belagelement 42 in einem Abstand $h_2$ radial vom Lagerpunkt des Gruppenelementes 4 entfernt ist.

Die beiden Belagelemente 41 sind außerdem symmetrisch zu einer durch den Lagerpunkt des Gruppenelementes 4 und den Nocken 55 gelegte Symmetrieachse angeordnet. Dadurch sind die auf diese beiden Belagelemente 41 wirkende Kräfte gleich.

Für die auf das weitere Belagelement 42 wirkende Kraft gilt demnach:

$$F_{42} = 2 \cdot F_{41} \cdot \frac{h_1}{h_2}$$

Mit $h_2 = 2 \cdot h_1$ folgt

$$F_{42} = 2 \cdot F_{41} \cdot \frac{h_1}{2 \cdot h_1} = F_{41}$$

Das erfindungsgemäße Verfahren zum Betätigen eines an einem Belaghalter 3 einer Bremsscheibenanordnung eines Schienenfahrzeuges gehaltenen Bremsbelags 1 für eine Teilbelag-Scheibenbremse eines Schienenfahrzeuges, mit mehreren an einem Belagträger 2 über Trägerbleche 5 sphärisch gelagerten Belagelementen 41, 42, zeichnet sich dadurch aus, dass bei Beaufschlagen des Bremsbelags 1 mit einer Zuspannkraft die Zuspannkraft derart auf die Belagelemente 41, 42 verteilt wird, dass die auf die Belagelemente 41, 42 wirkende Flächenpressung mit zunehmendem radialen Abstand von der Drehachse der Bremsscheibe abnimmt.

Durch die sich mit zunehmendem Abstand von der Drehachse der Bremsscheibe kontinuierlich verkleinernde Flächenpressung über sämtliche oben beschriebenen Funktionsgruppen (Belagelemente 41, 42, Gruppenelemente 4, 4', gesamter Bremsbelag 1) ist eine Neigung zu einem Schrägverschleiß der Belagelemente 41, 42 wesentlich reduziert.

Dadurch wird ein gleichmäßigeres Tragbild des Bremsbelages 1 über die gesamte Verschleißhöhe erreicht. Auch bei fortgeschrittenem Belagverschleiß ist eine gleichmäßigere Wärmeeinleitung in die Bremsscheibenoberfläche ermöglicht, wodurch sich die thermische Belastung der Bremsscheibe reduziert.

Aufgrund einer gleichmäßigeren und damit niedrigeren Oberflächentemperatur auf der Bremsscheibe ist auch der auf die Bremsenergie bezogene Verschleiß des Bremsbelages reduziert.

Der Belaghalter 3 weist auf seiner dem Belagträger 2 abgewandten Seite einen Federbügel 32 auf sowie einen durch diesen verspannbaren Bolzen 33, welcher durch eine Platte 31 des Belaghalters 3 hindurch in eine dazu vorgesehene Ausnehmung 24 in die Platte 21 des Belagträgers 2 eingreift.

**Bezuqszeichenliste**

| 1 | Bremsbelag |
|---|---|
| 2 | Belagträger |
| 21 | Platte |
| 22 | Ausnehmung |
| 24 | Ausnehmung |
| 3 | Belaghalter |
| 31 | Platte |
| 32 | Federbügel |
| 33 | Bolzen |
| 34 | Umgriffsteg |
| 4, 4' | Gruppenelement |
| 41 | Belagelement |
| 411 | Reibbelag |
| 412 | Belagplatte |
| 413 | Lagerelement |
| 42 | Belagelement |
| 421 | Reibbelag |
| 422 | Belagplatte |
| 423 | Lagerelement |
| 43 | Federelement |
| 5 | Trägerblech |
| 51 | Finger |
| 52 | Finger |
| 53 | Finger |
| 54 | Aussparung |
| 55 | Nocken |
| 56 | Lagerelement |
| 57 | Nocken |
| $A_1$ | Reibfläche |
| $A_2$ | Reibfläche |
| $D_1$ | Kreisline |
| $D_2$ | Kreislinie |
| $D_3$ | Kreislinie |
| $h_1$ | Abstand |
| $h_2$ | Abstand |
| S | Symmetrieebene |

**Patentansprüche**

1. Bremsbelag (1) für eine Teilbelag-Scheibenbremse eines Schienenfahrzeuges, aufweisend

   - einen Belagträger (2),
   - mehrere an dem Belagträger (2) angeordnete Gruppenelemente (4, 4'),
   - wobei jedes der Gruppenelemente (4) aus einem Trägerblech (5) und mehreren an dem Trägerblech (5) angeordneten Belagelementen (41, 42) besteht,
   - wobei an den jeweiligen Trägerblechen (5) Belagelemente (41, 42) mit wenigstens zwei unterschiedlich großen Reibflächen ($A_1$, $A_2$) angeordnet sind,
   - wobei die Belagelemente (41, 42) in ihrer Gesamtfläche zumindest annähernd in einem Kreisringsektor angeordnet sind,

   **dadurch gekennzeichnet, dass**

   - wenigstens zwei voneinander verschiedene erste und zweite Gruppenelemente (4, 4') an dem Belagträger (2) angeordnet sind,
   - wobei bei den ersten Gruppenelementen (4) die Anzahl der Belagelemente (41) mit größerer Reibfläche ($A_1$) größer ist als die Anzahl der Belagelemente (42) mit kleinerer Reibfläche ($A_2$),
   - wobei den zweiten Gruppenelementen (4') die Anzahl der Belagelemente (41) mit größerer Reibfläche ($A_1$) kleiner ist als die Anzahl der Belagelemente (42) mit kleinerer Reibfläche ($A_2$) und
   - wobei die ersten Gruppenelemente (4) radial zum Mittelpunkt eines den Kreisringsektor beinhaltenden gedachten Kreises weiter außen an dem Belagträger (2) angeordnet sind als die zweiten Gruppenelemente (4').

2. Bremsbelag nach Anspruch 1, **dadurch gekennzeichnet, dass** die Belagelemente (41, 42) auf den Trägerblechen (5) derart angeordnet sind, dass eine Symmetrieebene (S) jedes der Gruppenelemente

(4, 4') zumindest annähernd radial zum Mittelpunkt des den Kreisringsektor beinhaltenden gedachten Kreises ausgerichtet ist, wobei der Mittelpunkt des Kreises im montierten Zustand des Bremsbelag (1) annähernd der Drehachse einer Bremsscheibe der Teilbelag-Scheibenbremse entspricht.

3. Bremsbelag nach einem der vorstehenden Ansprüche, **dadurch gekennzeichnet, dass** wenigstens zwei der Belagelemente (41, 42) eines Gruppenelementes (4, 4') mit gleich großer Reibfläche ($A_1$, $A_2$) zumindest annähernd auf einer gedachten ersten Kreislinie ($D_1$, $D_3$) des Kreisringsektors und wenigstens ein Belagelement (42, 41) eines Gruppenelementes (4, 4') zumindest annähernd auf einer gedachten zweiten Kreislinie ($D_2$) des Kreisringsektors über das Trägerblech (5) an dem Belagträger (2) angeordnet sind.

4. Bremsbelag nach einem der vorstehenden Ansprüche, **dadurch gekennzeichnet, dass** jedes der Gruppenelemente (4, 4') drei Belagelemente (41, 42) aufweist.

5. Bremsbelag nach Anspruch 4, **dadurch gekennzeichnet, dass** alle Belagelemente (41) mit größerer Reibfläche ($A_1$) der ersten Gruppenelemente (4) zumindest annähernd auf der gemeinsamen gedachten ersten Kreislinie ($D_1$) des Kreisringsektors angeordnet sind.

6. Bremsbelag nach Anspruch 4 oder 5, **dadurch gekennzeichnet, dass** alle Belagelemente (42) mit kleinerer Reibfläche ($A_2$) der zweiten Gruppenelemente (4') zumindest annähernd auf der gemeinsamen gedachten zweiten Kreislinie ($D_2$) des Kreisringsektors angeordnet sind.

7. Bremsbelag nach einem der vorstehenden Ansprüche, **dadurch gekennzeichnet, dass** das Flächenverhältnis ($A_2/A_1$) der Belagelemente (42) mit kleinerer Reibfläche ($A_2$) zu den Belagelementen (41) mit größerer Reibfläche ($A_1$) zwischen 0,7 und 0,9, bevorzugt zwischen 0,81 und 0,83, beträgt.

8. Anordnung eines Bremsbelags (1) für eine Teilbelag-Scheibenbremse eines Schienenfahrzeuges an einem Belaghalter (3) einer Bremsscheibenanordnung eines Schienenfahrzeuges, **dadurch gekennzeichnet, dass** der Bremsbelag (1) gemäß einem der vorhergehenden Ansprüche ausgebildet ist.

9. Verfahren zum Betätigen eines an einem Belaghalter (3) einer Bremsscheibenanordnung eines Schienenfahrzeuges gehaltenen Bremsbelags (1) für eine Teilbelag-Scheibenbremse eines Schienenfahrzeuges, mit mehreren an einem Belagträger (2) über Trägerbleche (5) sphärisch gelagerten Belagelementen (41, 42, 43), **dadurch gekennzeichnet, dass** bei Beaufschlagen des Bremsbelags (1) mit einer Zuspannkraft die Zuspannkraft derart auf die Belagelemente (41, 42, 43) verteilt wird, dass die auf die Belagelemente (41, 42) wirkende Flächenpressung mit zunehmendem radialen Abstand von einer Drehachse der Bremsscheibe (6) abnimmt.

**Claims**

1. Brake pad (1) for a partially lined disc brake of a rail vehicle, comprising

   - a backing plate (2),
   - a plurality of group elements (4, 4') which are arranged on the backing plate (2),
   - wherein each of the group elements (4) consists of a support plate (5) and a plurality of pad elements (41, 42) which are arranged on the support plate (5),
   - wherein pad elements (41, 42) have at least two friction faces ($A_1$, $A_2$) of different size being arranged on the respective support plates (5),
   - wherein the pad elements (41, 42) are arranged in their total area at least approximately in a circular ring sector,

   **characterised in that**

   - at least two first and second group elements (4, 4') which are different from one another are arranged on the backing plate (2),
   - wherein in the case of the first group elements (4), the number of pad elements (41) with a larger friction face ($A_1$) is greater than the number of pad elements (42) with a smaller friction face ($A_2$),
   - wherein in the case of the second group elements (4'), the number of pad elements (41) with a larger friction face ($A_1$) is lower than the number of pad elements (42) with a smaller friction face ($A_2$), and
   - wherein the first group elements (4) are arranged on the backing plate (2), radially with respect to the centre point of an imaginary circle which contains the circular ring sector, closer to the outside than the second group elements (4').

2. Brake pad according to claim 1, **characterised in that** the pad elements (41, 42) are arranged on the support plates (5) in such a way that a plane of symmetry (S) of each of the group elements (4, 4') is oriented at least approximately radially with respect to the centre point of the imaginary circle which contains the circular ring sector, the centre point of the circle corresponding approximately to the rotational axis of a brake disc of the partially lined disc brake in the mounted state of the brake pad (1).

3. Brake pad according to any of the preceding claims, **characterised in that** at least two of the pad elements (41, 42) of a group element (4, 4') with a friction face ($A_1$, $A_2$) of identical size are arranged at least approximately on an imaginary first circle line ($D_1$, $D_3$) of the circular ring sector, and at least one pad element (42, 41) of a group element (4, 4') is arranged at least approximately on an imaginary second circle line ($D_2$) of the circular ring sector, on the backing plate (2) via the support plate (5).

4. Brake pad according to any of the preceding claims, **characterised in that** each of the group elements (4, 4') has three pad elements (41, 42).

5. Brake pad according to claim 4, **characterised in that** all the pad elements (41) with a larger friction face ($A_1$) of the first group elements (4) are arranged at least approximately on the common imaginary first circle line ($D_1$) of the circle ring sector.

6. Brake pad according to claim 4 or 5, **characterised in that** all the pad elements (42) with a smaller friction face ($A_2$) of the second group elements (4') are arranged at least approximately on the common imaginary second circle line ($D_2$) of the circle ring sector.

7. Brake pad according to any of the preceding claims, **characterised in that** the area ratio ($A_2/A_1$) of the pad elements (42) with a smaller friction face ($A_2$) with respect to the pad elements (41) with a larger friction face ($A_1$) is between 0.7 and 0.9, preferably between 0.81 and 0.83.

8. Arrangement of a brake pad (1) for a partially lined disc brake of a rail vehicle on a backing plate (3) of a brake disc arrangement of a rail vehicle, **characterised in that** the brake pad (1) is configured in accordance with any of the preceding claims.

9. Method for actuating a brake pad (1) for a partially lined disc brake of a rail vehicle, which brake pad (1) is secured on a pad holder (3) of a brake disc arrangement of a rail vehicle, having a plurality of pad elements (41, 42, 43) which are mounted spherically on a backing plate (2) via support plates (5), **characterised in that,** when the brake pad (1) is loaded with a brake application force, the brake application force is distributed to the pad elements (41, 42, 43) in such a way that the surface pressure which acts on the pad elements (41, 42) decreases at an increasing radial distance from a rotational axis of the brake disc (6).

**Revendications**

1. Garniture (1) de frein pour un frein à disque à garniture partielle d'un véhicule ferroviaire, comportant un support (2) de garniture,

plusieurs éléments (4, 4') de groupe disposés sur le support (2) de garniture,

chacun des éléments (4) de groupe étant constitué d'une tôle (5) de support et de plusieurs éléments (41, 42) de garniture disposés sur la tôle (5) de support, des éléments (41, 42) de garniture ayant au moins deux surfaces ($A_1$, $A_2$) de frottement de grandeur différente étant disposés sur les tôles (5) de support associées,

les éléments (41, 42) de garniture étant disposés sur toute leur surface au moins approximativement suivant un secteur d'anneau de cercle,

**caractérisée en ce que**

au moins deux premiers et deuxièmes éléments (4, 4') de groupe différents l'un de l'autre sont disposés sur le support (2) de garniture,

dans lequel, dans les premiers éléments (4) de groupe, le nombre des éléments (41) de garniture à plus grande surface ($A_1$) de frottement est plus grand que le nombre des éléments (42) de garniture à plus petite surface ($A_2$) de frottement,

dans lequel, dans les deuxièmes éléments (4') de groupe, le nombre des éléments (41) de garniture à plus grande surface ($A_1$) de frottement est plus petit que le nombre des éléments (42) de garniture à plus petite surface ($A_2$) de frottement et

dans lequel, les premiers éléments (4) de groupe sont disposés, radialement par rapport au centre d'un cercle imaginaire contenant le secteur d'anneau de cercle, plus à l'extérieur sur le support (2) de garniture que les deuxièmes éléments (4') de groupe.

2. Garniture de frein suivant la revendication 1, **caractérisé en ce que** les éléments (41, 42) de garniture sont disposés sur les tôles (5) de support de telle manière qu'un plan (S) de symétrie de chacun des éléments (4, 4') de groupe soit orienté au moins approximativement radialement par rapport au centre du cercle imaginaire contenant le secteur d'anneau de cercle, le centre du cercle correspondant, en l'état monté de la garniture (1) de frein, approximativement à l'axe de rotation d'un disque de frein du frein à disque à garniture partielle.

3. Garniture de frein suivant l'une des revendications précédentes, **caractérisée en ce qu'**au moins deux des éléments (41, 42) de garniture d'un élément (4, 4') de groupe à surface ($A_1$, $A_2$) de frottement de même grandeur sont disposés au moins approximativement sur une première circonférence ($D_1$, $D_3$) imaginaire du secteur d'anneau de cercle et au moins un élément (42, 41) de garniture d'un élément (4, 4') de groupe est disposé au moins approximativement sur une deuxième circonférence (D$_2$) imaginaire du secteur d'anneau de cercle au dessus de la tôle (5) de support sur le support (2) de garniture.

4. Garniture de frein suivant l'une des revendications précédentes, **caractérisée en ce que** chacun des éléments (4, 4') de groupe comporte trois éléments (41, 42) de garniture.

5. Garniture de frein suivant la revendication 4, **caractérisée en ce que** tous les éléments (41) de garniture à plus grande surface (A$_1$) de frottement des premiers éléments (4) de groupe sont disposés au moins approximativement sur la première circonférence (D$_1$) imaginaire commune du secteur d'anneau de cercle.

6. Garniture de frein suivant la revendication 4 ou 5, **caractérisée en ce que** tous les éléments (42) de garniture à plus petite surface (A$_2$) de frottement des deuxièmes éléments (4') de groupe sont disposés approximativement sur la deuxième circonférence (D$_2$) imaginaire commune du secteur d'anneau de cercle.

7. Garniture de frein suivant l'une des revendications précédentes, **caractérisée en ce que** le rapport (A$_2$/A$_1$) de surface des éléments (42) de garniture à plus petite surface (A$_2$) de frottement par rapport aux éléments (41) de garniture à plus grande surface (A$_1$) de frottement est compris entre 0,7 et 0,9, de préférence entre 0,81 et 0,83.

8. Montage d'une garniture (1) de frein pour un frein à disque à garniture partielle d'un véhicule ferroviaire sur un porte-garniture (3) d'un dispositif de disque de frein d'un véhicule ferroviaire, **caractérisé en ce que** la garniture (1) de frein est réalisée suivant l'une des revendications précédentes.

9. Procédé pour actionner une garniture (1) de frein maintenue sur un porte-garniture (3) d'un dispositif de disque de frein d'un véhicule ferroviaire, pour un frein à disque à garniture partielle d'un véhicule ferroviaire, comportant plusieurs éléments (41, 42, 43) de garniture montés de manière sphérique sur un support (2) de garniture au dessus d'une tôle (5) de support, **caractérisé en ce que**, en soumettant la garniture (1) de frein à une force d'application, la force d'application est répartie sur les éléments de garniture de telle manière que la pression superficielle agissant sur les éléments (41, 42) de garniture décroît à mesure qu'augmente la distance radiale à un axe de rotation du disque (6) de frein.

Fig. 1

EP 3 237 263 B1

# Fig. 2

Fig. 3

Fig. 4

EP 3 237 263 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0784761 B1
- CN 101975234 A
- CN 201836269 U
- CN 102003482 A
- CN 201810707 U